Europäisches Patentamt

European Patent Office

Office européen des brevets

(19)

(11) Veröffentlichungsnummer: **0 327 836 B1**

# (12) EUROPÄISCHE PATENTSCHRIFT

(45) Veröffentlichungstag der Patentschrift:
04.12.91 Patentblatt 91/49

(51) Int. Cl.⁵: **F16L 55/02**

(21) Anmeldenummer: **89100688.4**

(22) Anmeldetag: **16.01.89**

(54) **Schalldämpfer-Kulisse.**

(30) Priorität: **22.01.88 DE 3801867**

(43) Veröffentlichungstag der Anmeldung:
**16.08.89 Patentblatt 89/33**

(45) Bekanntmachung des Hinweises auf die
Patenterteilung:
**04.12.91 Patentblatt 91/49**

(84) Benannte Vertragsstaaten:
**AT BE CH DE ES FR GB GR IT LI LU NL SE**

(56) Entgegenhaltungen:
**DE-B- 2 706 591**
**GB-A- 1 556 823**

(73) Patentinhaber: **Rheinhold & Mahla AG**
**Gneisenaustrasse 15**
**W-8000 München 50 (DE)**

(72) Erfinder: **Schafhaupt, Horst**
**Tulpenstrasse 14**
**W-8081 Egenhofen (DE)**

(74) Vertreter: **Michelis, Theodor, Dipl.-Ing. et al**
**Tattenbachstrasse 9**
**W-8000 München 22 (DE)**

EP 0 327 836 B1

**Beschreibung**

Die Erfindung bezieht sich auf eine Schalldämpfer-Kulisse für den Einbau in Strömungskanäle in gasförmige Medien, insbesondere in Kraftwerken, bestehend aus einem äußeren, prismatischen Rahmen, in den Lamellenbleche zur Bildung von nach aussen offenen Kammern und Absorbtionsmaterial eingesetzt sind.

Eine derartige Schalldämpfer-Kulisse ist beispielsweise aus der DE-PC-3008329 bekannt. Hierbei sind beiderseits in einer Schicht aus Absorbermaterial winkelige Blechprofile mit Abstand untereinander angeordnet, so daß von diesen über einen Spalt nach außen offene Kammern gebildet werden, deren innen durchgehende Wandung von dem Absorbermaterial gebildet sind. Diese Schalldämpfer-Kulissen werden dabei oftmals in stark staubhaltigen Gasen eingesetzt, so daß dadurch die Gefahr besteht, daß sich das Absorbtionsmaterial leicht mit Staub zusetzt und nach einer gewissen Zeit seine Wirkung verliert,so daß es dann ausgewechselt werden muß. Dies ist bei den bisher üblichen Kulissen als kompakte Baueinheit jedoch nur unter Schwierigkeiten und mit größerem Aufwand möglich.

Der vorliegenden Erfindung liegt daher die Aufgabe zugrunde, eine Schalldämpfer-Kulisse zu schaffen, die im Bedarfsfall leicht so demontiert werden kann, daß das Absorbtionsmaterial zugänglich ist und leicht ausgewechselt werden kann und die darüberhinaus auch eine größere Baugröße einer Kulisseneinheit zuläßt.

Zur Lösung dieser Aufgabe ist erfindungsgemäß eine Schalldämpfer-Kulisse gemäß Anspruch 1 vorgesehen.

Die Lamellenbleche sind dabei zweckmäßigerweise hochkant und sich mit ihrem geraden Schenkeln innen und außen überlappend in die außenliegende, jeweils nach innen offene U-förmige Abkantung der mäanderförmigen Rahmenbleche eingesetzt.

Diese so aufgebauten beiden Kulissenteile können dann spiegelbildlich mit den Mineralfaserplattenseiten zusammengesetzt und auf Ober- und Unterseite über die nach außen ragenden Mäanderschenkel durchsetzende Schraubbolzen miteinander zu einer Einheit verschraubt sein.

Durch diesen zweiteiligen Aufbau einer Schalldämpfer-Kulisse mit Anordnung des Absorbermaterials beiderseits der Trennfuge ist dieses im Bedarfsfall durch Demontage der Verschraubung der beiden Kulissenteile leicht zugänglich und auswechselbar.

Bei größeren Baueinheiten ist zweckmäßigerweise stirnseitig auf der An- und Abströmseite einer derartigen Schalldämpfer-Kulisse je ein die beiden parallel liegenden U-Rahmen überdekkendes Strömungsleitblech aufgesetzt.

Ferner ist es zweckmäßig, wenn die den Lamellenblechen zugewandte Oberseite der Mineralfaserplatten feuchtigkeitsabweisend und/oder abbiegfest kaschiert ist. Bei extremen Einsatzfällen ist es darüberhinaus noch möglich zwischen Mineralfaserplatten und Lamellenblechen ein Maschendrahtgewebe anzuordnen.

Anhand einer schematischen Zeichnung sind Aufbau und Wirkungsweise eines Ausführungbeispiels nach der Erfindung näher erläutert. Dabei zeigen :

Figur 1     einen Längsschnitt durch eine Schalldämpfer-Kulisse und
Figur 2     einen Querschnitt entsprechend der Schnittlinie II-II nach Figur 1.

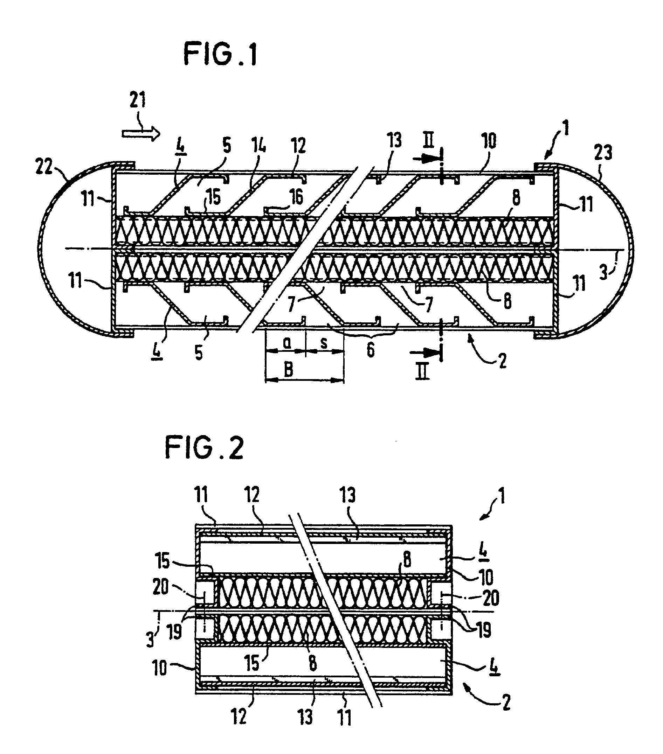

Wie man aus dem Längsschnitt nach Figur 1 ersieht, besteht die Schalldämpfer-Kulisse aus zwei Kulissenteilen 1 und 2, die entlang der strichpunktiert angedeuteten Teilfuge 3 in noch zu beschreibender Weise zusammengefügt sind. Jedes Kulissenteil 1 und 2 weist dabei eine Reihe von durch gestaffelt und im Abstand zueinander angeordnete angenähert S-förmige abgekantete Lamellenbleche 4 gebildete Kammern 5 auf, die jeweils über einen Spalt 6 von der Breite s nach außen und über einen Spalt 7 gleicher oder abweichender Breite nach innen offen sind. Auf der Rückseite der Spalte 7 ist dann ein Absorbtionsmaterial in Form von Mineralfaserplatten 8 angeordnet.

Aufbau und Zusammenbau jedes Kulissenteils 1 und 2 ist dabei deutlicher in Zusammenschau mit dem Querschnitt nach Figur 2 erläutert. Jeder Kulissenteil 1 und 2 weist auf seiner Ober- und Unterseite ein im Querschnitt mäanderförmig gekantetes Rahmenblech 10 auf, das in Längsrichtung über das gesamte Kulissenteil verläuft, und jeweils am Ende über ein in Höhenrichtung des Kulissenteils 1 bzw. 2 verlaufenden U-Rahmen miteinander verbunden sind. Jedes mäanderförmige Rahmenblech 10 ist dabei praktisch durch zwei umgekehrt aneinandergesetzte U-förmige Profile gebildet, wobei dann die Lamellenbleche 4 seitlich außenliegend in die Rahmenbleche 10 eingeschoben und mit diesen fest verbunden sind. Jedes Lamellenblech 4 weist dabei einen geraden, die Kammern 5 nach außen teilweise begrenzenden Schenkel 12 mit einer nach innen ragenden Abkantung 13, einen im Winkel von etwa 135° nach innen geneigten Steg 14, der die Begrenzung zur Nachbarkammer bildet und einen daran angesetzten geraden Schenkel 15 mit einer Abkantung 16 auf, der die Kammer 5 auf der Innenseite teilweise begrenzt.

Innenliegend zu den Schenkeln 15 der Lamellenblech 4 ist dann zwischen den nach innen gewölbten

2

Abkantungen der mäanderförmigen Rahmenbleche 10 Absorbermaterial in Form von Mineralfaserplatten 8 eingesetzt.

Nach entsprechender Montage und Verfüllung mit Absorbermaterial werden dann die beiden Kulissenteile 1 und 2 spiegelbildlich mit ihren Absorberschichten 8 aneinandergrenzend zusammengestellt und auf der Ober- und Unterseite über entsprechende Schraubbolzen 20, die die nach außen ragenden Schenkel 19 der mäanderförmigen Rahmenbleche 10 durchdringen, miteinander verschraubt und bilden somit eine Kulisseneinheit, die beidseitig entsprechend dem Pfeil 21 angeströmt wird.

Zusätzlich können dann noch anströmseitig und abströmseitig je ein die beiden parallel die U-Rahmen 11 überdeckendes Strömungsleitblech 22 und 23 aufgesetzt werden.

Zur Anpassung an die optimal zu dämpfende Schallfrequenz sind dabei die Kammerbreite B und insbesondere die Breite s des Eintrittsspaltes 6 und damit die Länge a des Lamellenschenkels 12 maßgebend, die jeweils entsprechend variiert werden können. Optimale Schalldämmung ergibt sich dabei in einem Frequenzbereich, bei dem der Abstand zwischen der Oberfläche der Schalldämpfer-Kulisse und der Absorberschicht einem Viertel der Wellenlänge der zu dämpfenden Frequenz entspricht und wenn die Kammerbreite—gemessen in bzw. gegen Richtung des gasförmigen Mediums—ebenfalls ein Viertel bzw. drei Viertel der Wellenlänge beträgt.

Zweckmäßigerweise sind die den Spalten 7 zwischen den Lamellenblechen 4 zugewandten Oberflächen der Mineralfaserplatten feuchtigkeitsabweisend und/oder abriebfest kaschiert, wobei bei besonderen Anforderungen auf dieser Seite noch ein nicht näher dargestelltes Maschendrahtgewebe angeordnet sein kann.

Mit dem beschriebenen Aufbau einer Schalldämpfer-Kulisse können also einmal sehr große Einheiten erstellt werden, andererseits sind im Bedarfsfall die beiden Kulissenteile 1 und 2 einfach durch Lösen der Schraubverbindung 20 demontierbar, so daß dann leicht verschmutzte Mineralfasereinlagen 8 entfernt und durch neue Mineralfaserplatten ersetzt werden können.

## Patentansprüche

1. Schalldämpfer-Kulisse für den Einbau in Strömungskanäle für gasförmige Medien, insbesondere in Kraftwerken, mit einem äusseren, langgestreckten prismatischen Rahmen mit rechteckigem Querschnitt, in dessen breitere Längsseiten Lamellenbleche (4) zur Bildung von nach außen zur Gasströmung hin offenen Kammern (5) sowie Absorptionsmaterial (8) eingesetzt sind, dadurch gekennzeichnet, daß die Kulisse in Längsrichtung mittig zu ihren Schmalseiten zusammensetzbar geteilt ist und aus zwei spiegelbildlichen Kulissenteilen (1, 2) besteht, von denen jedes Kulissenteil (1, 2) an seinen Schmalseiten ein in Längsrichtung des Kulissenteils verlaufendes, im Querschnitt angenähert S-förmig ausgebildetes Rahmenblech (10) aufweist, wobei die beiden Rahmenbleche (10) eines Kulissenteils (1, 2) spiegelbildlich zueinander angeordnet sind und an ihren freien Stirnkanten durch U-förmige Rahmen (11), die die Stirnseiten der Kulissenteile (1, 2) bilden, miteinander verbunden sind, und daß die angenähert S-förmig gekanteten Lamellenbleche (4) auf der Außenseite jedes Kulissenteils (1, 2) in die S-förmigen Rahmenbleche (10) eingeschoben und befestigt sind und daß das aus Mineralfaserplatten (8) bestehende Absorptionsmaterial in den an die Teilungsebene (3) angrenzenden Bereich zwischen die S-förmigen Rahmenbleche (10) eingesetzt ist.

2. Schalldämpfer-Kulisse nach Anspruch 1, dadurch gekennzeichnet, daß die S-förmigen Rahmenbleche (10) spiegelbildlich zueinander so angeordnet sind, daß sie zur außenliegenden Lamellenseite hin zwei nach innen offene, U-förmige Abkantungen bilden, in die die S-förmigen Lamellenbleche (4) derart eingeschoben sind, daß sich ihre geraden, abwechselnd innen- und außenliegenden, in Längsrichtung der Kulisse verlaufenden Schenkel (12, 15) überlappen.

3. Schalldämpfer-Kulisse nach Anspruch 1 oder 2, dadurch gekennzeichnet, daß die beiden Kulissenteile (1, 2) spiegelbildlich an den die Mineralfaserplatten (8) tragenden Längsflächen (3) zusammengesetzt und über Schraubbolzen (20), die die an der Teilungsebene (3) nach außen ragenden Schenkel (19) der S-förmigen Rahmenbleche (10) durchdringen, miteinander verschraubt sind.

4. Schalldämpfer-Kulisse nach Anspruch 3, dadurch gekennzeichnet, daß sowohl auf der Anströmseite als auch auf der Abströmseite der Kulisse jeweils die beiden, nach dem Zusammenbau nebeneinanderliegenden U-förmigen Rahmen (11) von einem gewölbten Strömungsleitblech (22, 23) überdeckt sind.

5. Schalldämpfer-Kulisse nach Anspruch 1 und 2, dadurch gekennzeichnet, daß die den Lamellenblechen (4) zugewandte Seite der Mineralfaserplatten (8) feuchtigkeitsabweisend und/oder abriebfest kaschiert ist.

6. Schalldämpfer-Kulisse nach Anspruch 1 und 2, dadurch gekennzeichnet, daß zwischen Mineralfaserplatte (8) und Lamellenblechen (4) ein Maschendrahtgewebe angeordnet ist.

## Claims

1. A silencer baffle for installation in flow channels for gaseous media, in particular in power plants, comprising an outer, elongated, prismatic frame of rectangular cross-section, in the wider longitudinal sides of which lamellar metal sheets (4), which form chambers (5) outwardly open in the direction of the gas flow, and absorption material (8) are inserted, characterised in that the baffle is divided in the longitudinal direction centrally of its narrow sides in such manner that it can be re-assembled and consists of two homologous baffle components (1, 2) of which each baffle component (1, 2) comprises, on its narrow sides, a frame metal sheet (10) which extends in the longitudinal direction of the baffle component and is approximately S-shaped in cross-section, where the two frame metal sheets (10) of a baffle component (1, 2) are arranged homologously to one another and at their free end edges are connected to one another by U-shaped frames (11) which form the end sides of the baffle components (1, 2), and that the lamellar metal sheets (4), which are provided with approximately S-shaped flanges, on the outside of each baffle component (1, 2) are inserted into the S-shaped frame metal sheets (10) and attached thereto, and that the absorption material which consists of mineral fibre plates (8) is inserted into the zone adjacent to the separating plane (3) between the S-shaped frame metal sheets (10).

2. A silencer baffle as claimed in Claim 1, characterised in that the S-shaped frame metal sheets (10) are arranged homologously to one another in such manner that in the direction of the outer planar side they form two inwardly open U-shaped flanges into which the S-shaped lamellar metal sheets (4) are inserted in such manner that their straight, alternately inner and outer flanks (12, 15) extending in the longitudinal direction of the baffle, overlap.

3. A silencer baffle as claimed in Claim 1 or 2, characterised in that the two baffle components (1, 2) are assembled homologously on the longitudinal surfaces (3) which bear the mineral fibre plates (8) and are screwed to one another via screw bolts (20) which penetrate the flanks (19), which project outwardly at the separating plane (3), of the S-shaped frame metal sheets (10).

4. A silencer baffle as claimed in Claim 3, characterised in that both on the inflow side and the outflow side of the baffle, the two U-shaped frames (11) which are arranged one beside another after their assembly, are covered by a curved flow deflecting plate (22, 23).

5. A silencer baffle as claimed in Claim 1 and 2, characterised in that the side of the mineral fibre plates (8) which faces towards the lamellar metal sheets (4) is provided with a moisture-repellent and/or wear resistant lining.

6. A silencer baffle as claimed in Claim 1 and 2, characterised in that a wire mesh fabric is arranged between the mineral fibre plate (8) and the lamellar metal sheets (4).

## Revendications

1. Coulisse pour silencieux, destinée à être insérée dans des canaux d'écoulement pour des milieux gazeux, notamment dans des centrales nucléaires, et comportant un cadre prismatique extérieur allongé possédant une section transversale rectangulaire et dans les grands côtés duquel sont insérés des lamelles en tôle (4) servant à former des chambres (5) ouvertes en direction de l'extérieur pour l'écoulement du gaz, ainsi qu'un matériau absorbant (8), caractérisée par le fait que la coulisse est subdivisée de manière à être démontable dans la direction longitudinale au milieu de ses petits côtés et est constituée par deux éléments de coulisse symétriques (1, 2), dont chacun possède, sur ses petits côtés, un cadre en tôle (10) qui s'étend dans la direction longitudinale de l'élément de coulisse et est réalisé avec une section transversale approximativement en forme de S, les deux cadres en tôle (10) de l'élément de coulisse (1, 2) étant disposés symétriquement et étant reliés entre eux, au niveau de leurs bords frontaux libres, par des cadres en forme de U (11), qui forment les faces frontales des éléments de coulisse (1, 2), et que les lamelles en tôle (4), dont les bords sont approximativement en forme de S, sont insérées et fixées, sur le côté extérieur de chaque élément de coulisse (1, 2), dans les cadres en tôle en forme de S (10) et que le matériau absorbant constitué par des plaques de fibres minérales (8) est inséré dans la zone, qui jouxte le plan de subdivision (3), entre les cadres en tôle (10) en forme de S.

2. Coulisse pour silencieux suivant la revendication 1, caractérisée par le fait que les cadres en tôle en forme de S (10) sont disposés symétriquement de manière à former, en direction du côté extérieur des lamelles, deux rabats en forme de U, ouverts vers l'intérieur, dans lesquels sont insérées les lamelles en tôle en forme de S (4) de telle sorte que leurs branches rectilignes (12, 15), alternativement intérieure et extérieure, qui s'étendent dans la direction longitudinale de la coulisse, se chevauchent.

3. Coulisse pour silencieux suivant la revendication 1 ou 2, caractérisée par le fait que les deux éléments de coulisse (1, 2) sont réunis symétriquement au niveau des surfaces longitudinales (3) portant les plaques de fibres minérales (8) et sont réunis entre eux par des vis (20), qui traversent les branches (19), qui font saillie extérieurement au niveau du plan de subdivision (3), des cadres en tôle en forme de S (10).

4. Coulisse pour silencieux suivant la revendication 3, caractérisée par le fait que respectivement les deux cadres en forme de U (11), qui sont juxtaposés après l'assemblage, sont recouverts par une chicane cintrée (22, 23) de guidage de l'écoulement, aussi bien sur le côté d'arrivée de l'écoulement que sur le côté de départ de l'écoulement au niveau de la coulisse.

5. Coulisse pour silencieux suivant les revendications 1 et 2, caractérisée par le fait que la face, tournée vers les lamelles en tôle (4), des plaques de fibres minérales (8) est doublée de manière à repousser l'humidité et/ ou résister à l'usure.

6. Coulisse pour silencieux suivant les revendications 1 et 2, caractérisée par le fait qu'un tissu de fils métalliques est disposé entre la plaque de fibres minérales (8) et les lamelles en tôle (4).

# FIG.1

# FIG.2